# EUROPÄISCHE PATENTSCHRIFT

(11) **EP 1 485 273 B1**
(45) Veröffentlichungstag und Bekanntmachung des Hinweises auf die Patenterteilung: **27.09.2006**
(21) Anmeldenummer: 03708036.3
(22) Anmeldetag: 18.02.2003
(51) Int. Cl.: B60R 16/02

(54) **STEUER- ODER SCHALTELEMENT FÜR FAHRZEUGE**
CONTROL ELEMENT OR SWITCHING ELEMENT FOR VEHICLES
ELEMENT DE COMMANDE OU DE COMMUTATION POUR VEHICULES

(30) Priorität: 18.03.2002 DE 10211946
(43) Veröffentlichungstag der Anmeldung: 15.12.2004
(73) Patentinhaber: SIEMENS AKTIENGESELLSCHAFT, 80333 München (DE)
(72) Erfinder: KRAUS, Ulrich, 78056 Villingen-Schwenningen (DE); WOLF, Jürgen, 78048 Villingen-Schwenningen (DE)
(86) Internationale Anmeldenummer: PCT/DE2003/000505
(87) Internationale Veröffentlichungsnummer: WO 2003/078210

(56) Entgegenhaltungen:
- EP-A- 0 348 691
- EP-A- 0 856 432
- DE-A- 10 026 498
- DE-A- 19 625 730
- US-A- 5 080 207

## Beschreibung

Die vorliegende Erfindung betrifft ein Steuer- oder Schaltelement für Fahrzeuge, das als Informationselement oder als interaktives Informations- und Kommunikationselement ausgebildet ist.

In Kraftfahrzeugen sind eine Reihe von Informationssystemen eingebaut, die einen bestimmten Sensor oder Detektor und eine zugehörige Anzeige, die üblicherweise im Armaturenbrett eingebaut ist, umfassen. Solche Anzeigen sind der Tachometer, die Temperaturanzeige des Kühlsystems, Tankanzeige, Öldruckwarnlampe, Drehzahlmesser und eine Reihe von Kontrolleuchten für Handbremse, offen stehende Türen und dergleichen. Außerdem gibt es eine Reihe von Vorschlägen, allgemeine Gefahrensituationen im Blickfeld des Fahrers anzuzeigen. Dazu gehören Anzeigen, die Abstandswarnsysteme (Abstandsradar) und Ähnliches betreffen.

Der Nachteil derartiger Systeme besteht darin, dass zum Erkennen der optischen Signale Kopf- und Augenbewegungen erforderlich sind, sowie verstandesmäßige Leistungen erbracht werden müssen, da im Einzelfall erkannt werden muss, auf welche Gefahrensituation oder welche Fahrzeugmängel durch die betreffende Anzeige hingewiesen wird. In jedem Fall wird der Fahrer durch die Wahrnehmung einer optischen Anzeige und die Zuordnung deren Bedeutung vom Fahren abgelenkt oder zumindest kurzfristig in seiner Aufmerksamkeit beeinträchtigt. Daraus resultiert eine verlängerte Reaktionszeit auf geänderte Verkehrsbedingungen. Das ist insbesondere bei einer Fahrt im Dunkeln oder im Regen mit erheblichen Nachteilen verbunden.

Von Spielzeugen und Spielautomaten her ist es bekannt, zusätzlich zu optischen Eindrücken auch Tasteindrücke zu vermitteln. Solche den Tastsinn betreffenden (haptischen) Reize und Sinneswahrnehmungen werden bei Spielautomaten aber in der Regel nicht simultan zu den optischen Eindrücken vermittelt. Es handelt sich daher bei derartigen haptischen Reizen nicht um Ergänzungen des optischen Eindruckes, sondern um zusätzlich hervorgerufene Sinneseindrücke, die als Folge oder Begleitumstand der optischen Eindrücke wahrgenommen werden.

In einer Internet-Website www.wissenschaft.de/sixcms, "bild der wissenschaft online", wurde am 11. 3. 2001 ein Technikreport veröffentlicht, der beschreibt, wie im Bereich der PKW-Sicherheit Fahrüberwachungssysteme mittels eines Computers ausgestaltet werden können. Dabei werden der Lidschlag und Augenbewegungen des Fahrers kontrolliert und möglichen Unfällen durch Sekundenschlaf vorgebeugt oder sonstige Beeinträchtigungen des Fahrers vermieden. Das System verfügt über ein so genanntes Gesichtsmodell. Es vergleicht Bildpunkt für Bildpunkt gespeicherte und aktuelle Gesichtsstrukturen in verschiedenen Auflösungen. Damit können Gesichter oder Teile des Gesichts bestimmt und mit abgespeicherten Daten verglichen werden.

Aus der EP 0 348 691 A, der US 5,080,207 A und der EP 0 856 432 A ist jeweils ein gattungsgemäßes Steuer- oder Schaltelement für Fahrzeuge bekannt, bei dem ein Bedienelement zum Steuern oder zum Schalten eines Fahrzeuges oder Fahrzeugteiles vorhanden ist und Mittel zur Übermittlung von Warnungen und/oder Informationen über den Zustand des Fahrzeuges oder des Verkehrs an einen Fahrer vorhanden sind, wobei diese Mittel so an oder in dem Bedienelement angebracht sind, dass der Fahrer während einer Bedienung des Fahrzeuges damit zumindest zeitweise in Berührung kommt und diese Mittel den Tastsinn mechanisch oder elektrisch ansprechen. Bei der letztgenannten Schrift enthalten diese den Tastsinn ansprechenden Mittel einen motorisch betriebenen rotierenden Exzenter, der für die Erzeugung eines Reizeindruckes einer Vibration vorgesehen ist.

Aufgabe der vorliegenden Erfindung ist es, alternative Mittel anzugeben, die den Tastsinn ansprechen.

Diese Aufgabe wird mit einem Steuer- oder Schaltelement mit einem haptischen Informationselement mit den Merkmalen des Anspruches 1 bzw. mit den Anordnungen eines Steuer- oder Schaltelementes mit den Merkmalen der Ansprüche 5 bzw. 6 gelöst. Ausgestaltungen ergeben sich aus den abhängigen Ansprüchen.

Bei dem mit einem haptischen Informationselement ausgerüsteten Steuer- oder Schaltelement des Fahrzeugs sind mechanisch, chemisch oder elektrisch den Tastsinn ansprechende Mittel in einem Bedienelement zum Steuern oder zum Schalten eines Fahrzeugs oder Fahrzeugteiles vorhanden, die eingesetzt werden, um den Fahrer, der diese Mittel berührt, mit Warnungen und/oder Informationen über den Zustand des Fahrzeugs oder des Verkehrs zu versorgen. Vorzugsweise sind diese den Tastsinn ansprechenden Mittel in das Lenkrad oder andere zum Steuern oder Schalten vorgesehene Räder, Griffe oder Hebel integriert, die das eigentliche Steuer- oder Schaltelement bilden.

Weitergehende Ausgestaltungen des Steuer- oder Schaltelementes sehen vor, mit dem integrierten Informationselement interaktive Funktionen zu verbinden und Antworten des Fahrers auf die gegebenen Informationen zu erfassen und zu verarbeiten. Insbesondere ist es möglich, vorzusehen, dass der Fahrer das Informationssystem des Fahrzeugs veranlasst, die betreffenden Warnhinweise zu gewünschter Zeit auch noch optisch, z. B. in entsprechenden Kontrolllampen des Armaturenbrettes, wiederzugeben. Die Blickrichtung des Fahrers wird so nicht durch das Aufleuchten roter Kontrolllampen abgelenkt; der Fahrer erfährt vielmehr durch die haptisch übermittelte Information, dass eine besondere Bedingung eingetreten ist, und kann in einem Moment, in dem das Verkehrsgeschehen nicht seine völlige Aufmerksamkeit beansprucht, die betreffende Information optisch wiedergeben lassen und von den Anzeigen des Armaturenbrettes ablesen.

Der prinzipielle Aufbau eines Steuer- oder Schaltelementes mit einem integrierten, insbesondere interaktiven, haptischen Informationselement umfasst vorzugsweise vier Teile, nämlich ein Aktorelement, gegebenenfalls ein Sensorelement, ein Gehäuse und eine elektronische Ansteuereinheit. Das Aktorelement hat die Aufgabe, zu der zu übermittelnden Information analoge Reize zu erzeugen, die über den Tastsinn der Hand des Fahrers registriert werden können. Das kann durch Druck, Zug oder elektrische Spannung des Aktors geschehen.

Ein für eine interaktive Funktion vorgesehenes Sensorelement hat die Aufgabe, Druck- und Zugbewegungen sowie Änderungen des Hautwiderstandes zu detektieren bzw. in analoge elektrische Signale umzuwandeln. Diese Signale dienen dazu, das Steuerelement anzusteuern, und bilden gegebenenfalls die Grundlage zu einer weiteren Datenverarbeitung.

Das Sensorelement und das Aktorelement können eine Einheit bilden. Ein derartiges Element kann z. B. einen elektromagnetisch bewegten Spulenkörper mit Eisenkern umfassen, der beim Auftreten eines Druckwiderstandes, der einer zunächst angeregten Bewegung entgegengesetzt ist, einen höheren Strom aufnimmt. Diese Stromänderung wird ausgewertet und der Ansteuereinheit als Signal zur Verfügung gestellt. Der Druckwiderstand kann vom Fahrer als Antwort auf eine haptische Information auf das kombinierte Aktor-/Sensorelement ausgeübt werden.

Das Gehäuse des Steuer- oder Schaltelementes ist vorzugsweise ein Teil eines Lenkrades, eines Steuer- oder Schaltknüppels oder dergleichen. Bei einem Nutzfahrzeug, bei dem Fahrzeugteile wie z. B. Greifarme, mittels Steuerknüppeln bewegt werden, kann über eine ertastbare Informationsübermittlung z. B. mitgeteilt werden, ob das betreffende bewegte Teil in einen unzulässigen Zustand (z. B. Drucküberlastung bei Greifern) gebracht wird. Insbesondere bei der Steuerung von Greifarmen, Baggerschaufeln und dergleichen ist eine ständige optische Kontrolle von Richtung und Geschwindigkeit der Bewegung erforderlich, so dass es hier von besonderem Vorteil ist, wenn der Fahrer nicht gleichzeitig auch noch optische Anzeigen im Fahrzeug überwachen muss.

Die Übertragung aller notwendigen Datensätze, wie Aktorimpulse, Sensordaten, jeweils aktive Aktor- und Sensorbereiche und dergleichen, erfolgt vorzugsweise über ein geeignetes Netzwerk. Beispiele für eine haptische Informationsübermittlung sind
a) Lastwechseldetektion: Beschleunigungswächter signalisieren bei kritischen Lastwechselreaktionen des Fahrzeugs über das System eine dem Lastwechselgradienten entsprechend parametrisierte Schleudergefahr. Diese wird über mehr oder weniger pulsierende Vibrationen in der entsprechenden Lenkradhälfte dem Fahrer mitgeteilt.
b) Eiswächter: Eiswächter signalisieren bei Frost und erhöhter Geschwindigkeit über den haptischen Sensor die Glatteisgefahr. Das haptische Signal verstärkt sich mit steigender Geschwindigkeit.
c) Abstandswarner: Bei Unterschreiten des Sicherheitsabstandes zum Vorderfahrzeug gibt ein Abstandswarnsystem je nach gemessener Entfernung unterschiedlich pulsierende Signale ab.
d) Fahrbahnranderkennungssysteme: Bei Überschreiten der rechten Fahrbahnmarkierung oder der Mittellinie gibt ein Fahrbahnranderkennungssystem über das haptische Steuerelement Warnsignale in die linke oder rechte Lenkradhälfte ab. Die Warnsignale intensivieren sich, je näher das Fahrzeug dem Fahrbahnrand kommt.
e) Biometrische Fahrerüberwachungssysteme: Fahrerüberwachungssysteme detektieren Lidschlag und Augenbewegung und geben bei Sekundenschlaf an den Fahrer unangenehme Reizimpulse über das haptische Informationselement ab. Mit abnehmender Aufmerksamkeit des Fahrers nimmt die Intensität der Impulse zu.

Als Ausführungsbeispiele von Sensor- und Aktorsystemen, die für das haptische Informationselement geeignet sind, kommen insbesondere Drucknadelsysteme und Dehnungsnadelsysteme in Frage. Bei einem Drucknadelsystem ist der Aktor eine matrixartige Anordnung aus beweglichen, in elektromagnetischen Spulen gelagerten, unterseitig gefederten Nadeln, die zeilenweise und spaltenweise angesteuert werden. Wird eine Spannung an eine elektromagnetische Spule dieser Anordnung angelegt, so bewegt sich die Nadel aus der Spule heraus und drückt gegen die Tastorgane in der Hand des Fahrers. Die Bewegung kann von einem Ausgangszustand in einen dazu alternativen statischen Endzustand erfolgen; oder es kann eine ständige Vibration der Nadeln oder eines Teils der Nadeln erzeugt werden. Der Fahrer empfindet dann einen Druck beziehungsweise ein leichtes Kribbeln, das er als Informationssignal interpretiert. Als Erwiderung kann der Fahrer einen Gegendruck auf die vorgeschobenen Nadeln ausüben und dadurch in den Spulen einen Induktionsstrom hervorrufen bzw., im Falle einer Vibrationsbewegung, die Vibration so behindern, dass auch hier der Induktionsstromfluss verändert wird. Die damit induzierte Spannung wird detektiert und als Sensorsignal verwertet, um z. B. eine optische Anzeige zu generieren oder bereits eine Betriebsfunktion des Fahrzeugs zu ändern.

Bei einem Dehnungsnadelsystem werden die Nadeln seitlich gekippt, so dass die Haut der aufliegenden Hand leicht gedehnt wird. Der Fahrer ertastet somit eine Änderung der Oberflächenstruktur des Gegenstandes, z. B. des Lenkrades. Diese Änderung wird als Signal übermittelt. Die technische Ausführung entspricht ansonsten im Wesentlichen dem Drucknadelsystem. Wird bei dem Dehnungsnadelsystem ein Druck auf die Nadeln ausgeübt, so werden auch hier in den Elementen, die das Ausrichten der Nadeln bewirken, Spannungen induziert, mit denen entsprechende Reaktionen des Systems ausgelöst werden können.

Es folgt eine genauere Beschreibung von Ausführungsbeispielen anhand der Figuren 1 bis 3.
Die Figur 1 zeigt ein Schema eines Lenkrades mit einer nicht erfindungsgemäßen Exzentervorrichtung.
Die Figur 2 zeigt ein Schema einer Anordnung beweglicher Nadeln.
Die Figur 3 zeigt ein Prinzipschaltbild einer Ansteuerung des haptischen Informationselementes.

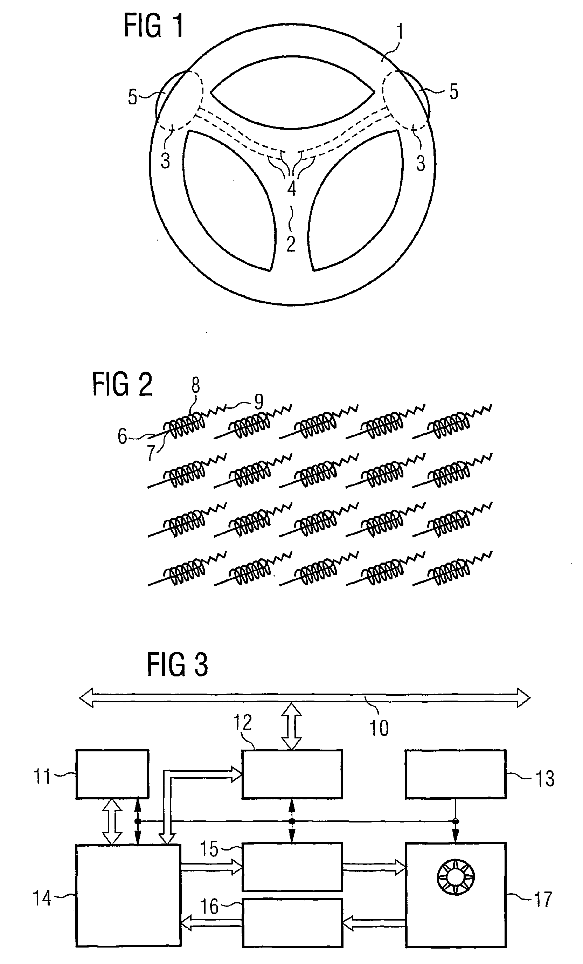

In der Figur 1 ist im Schema das Lenkrad eines Fahrzeuges dargestellt. Der Lenkkranz 1 ist wie üblich durch Stege, Speichen oder dergleichen mit der Lenkradnabe 2 verbunden. In dem Lenkkranz 1 sind, hier als verdeckte Kontur gestrichelt eingezeichnet, Vibrationselemente 3 vorhanden, die über elektrische Zuleitungen 4 mit Spannung versorgt werden. Diese Vibrationselemente 3 können an sich bekannte Bauteile sein, die jeweils mit einem Exzenter oder mit einem eine Unwucht aufweisenden Rotor versehen sind und Vibrationen erzeugen.

Der aktive Bereich 5 des Vibrationselementes, in dem die Oberfläche oder Seitenfläche des Exzenters bei einer Rotation periodisch stärker oder schwächer hervortritt oder fühlbare Vibrationen auf eine Außenfläche des Vibrationselementes übertragen werden, ist jeweils so angeordnet, dass die Vibrationen und deren Frequenzänderungen beim Angreifen des Lenkrades deutlich gespürt werden. Bei dem Beispiel der Figur 1 sind zwei Vibrationselemente vorhanden; deren Anzahl ist aber grundsätzlich beliebig.

Das eigentliche Vibrationselement 3 kann zu der Außenfläche des Lenkkranzes hin mit einem verformbaren, insbesondere elastischen, Material zur Verkleidung des Lenkkranzes 1 abgedeckt sein, durch das hindurch die Vibrationen nach außen übertragen werden können. Es kann statt dessen auch eine Öffnung oder ein Schlitz im Lenkkranz an der Stelle des jeweiligen Exzenters vorgesehen sein.

Die Vibrationsfrequenz des Vibrationselementes wird vorzugsweise elektronisch eingestellt und verändert. Ein Abbremsen der Vibrationen beziehungsweise der Rotation des Exzenters durch die Hand des Fahrers resultiert in einer geänderten Stromaufnahme, die in einer Auswerteschaltung festgestellt und, als Schaltbefehl interpretiert, in eine Änderung einer Funktion oder Einstellung des Fahrzeugs umgesetzt werden kann.

Es handelt sich bei der beschriebenen Anordnung nur um ein mögliches Beispiel für eine Ausführungsform des weiter oben beschriebenen Exzentersystems. Statt des Lenkrades kann ein Griff oder eine andere Steuer- oder Schaltvorrichtung damit ausgestattet sein.

In der Figur 2 ist ein Schema einer Anordnung aus beweglichen Nadeln dargestellt, die zum Beispiel statt der Vibrationselemente in die Außenfläche eines Lenkkranzes integriert sein kann. Die Nadeln 6 sind mit Magneten 7 versehen, die im Magnetfeld einer jeweiligen Spule 8 eines elektrischen Leiters bewegt werden, insbesondere in Vibrationen versetzt werden.

Zur Erzeugung einer rückstellenden Kraft beziehungsweise zur Anpassung einer Resonanzfrequenz sind vorzugsweise Federelemente vorgesehen, die in der Figur 2 durch vereinfacht eingezeichnete Federn 9 angedeutet sind. Die genaue Ausgestaltung einer derartigen Anordnung, für die auch andere Antriebsmittel in Frage kommen, zum Beispiel eine piezoelektrische Anregung, kann auf Grund der einschlägigen Fachkenntnis an die Erfordernisse entsprechend dem jeweiligen Lenkrad, Griff oder Schalthebel angepasst werden.

Bei der Realisierung eines Drucknadelsystems oder eines Dehnungsnadelsystems kann ein kleiner Bereich der Außenseite des Lenkkranzes mit einer matrixartigen Anordnung der miniaturisierten Nadeln versehen sein. Vorzugsweise ist jeweils eine dieser Anordnungen aus Nadeln in Bereichen des Lenkrades angebracht, in denen der Fahrer das Lenkrad in der Grundposition bei Geradeausfahrt des Fahrzeuges üblicherweise angreift: z. B. zwischen den Positionen, die zwei Uhr und drei Uhr beziehungsweise neun Uhr und zehn Uhr auf dem Zifferblatt einer analogen Uhr entsprechen.

In der Figur 3 ist ein Prinzipschaltbild der Ansteuerung dargestellt. Die Datensätze werden über ein Netzwerk 10 übertragen. Ein Übertrager 12 (Schnittstelle, Interface) empfängt die Daten und stellt sie dem programmierbaren Verarbeitungsmodul 14 zur Verfügung. Das Verarbeitungsmodul 14 bereitet die übermittelte Information mit Hilfe des Speichers 11 auf. Der Speicher 11 beinhaltet alle zum Betrieb des interaktiven haptischen Informationselementes bzw. Steuerelementes notwendigen Parameter und Daten, wie z. B. die fahrerspezifische Reizschwelle, Vibrationsrhythmen und dergleichen, und stellt sie mindestens einem vorhandenen Aktortreiber 15 und gegebenenfalls mindestens einem vorhandenen Sensortreiber 16 zur Verfügung.

Ein Aktortreiber 15 ermöglicht die Steuerung des haptischen Elementes 17; bei Matrixsystemen übernimmt ein Aktortreiber insbesondere die Ansteuerung von Zeilen und Spalten der Anordnung. Mindestens ein Sensortreiber 16 kann vorhanden sein, um die vom haptischen Element 17 empfangenen Fahrerinformationen, z. B. einen ausgeübten Druck oder einen elektrischen Hautwiderstand, in das Verarbeitungsmodul 14 zu übertragen. Bei Matrixsystemen übernimmt er die Abfrage von Zeilen und Spalten.

Die zum Betrieb des interaktiven haptischen Informationselementes notwendigen Spannungen werden über ein Bordspannungsmodul 13 aus dem Bordspannungsnetz des Fahrzeuges übertragen und aufbereitet. Die Spannungsversorgung ist in der Figur 3 mit den abzweigenden einfachen Pfeilen angedeutet, während die nicht ausgefüllten konturierten Pfeile die Informationsübertragung darstellen.

Das Informationselement kann in einer Anordnung mit mindestens einer Vorrichtung des Fahrzeuges verbunden sein, die zur Erzeugung eines Informationssignals vorgesehen ist, das zur Ansteuerung der den Tastsinn ansprechenden Mittel des Informationselementes dient. Eine solche Vorrichtung ist insbesondere ein Sensor oder Detektor aus der Gruppe von Abstandsradar zur Kontrolle des Abstandes zu einem vorausfahrenden oder nachfolgenden Fahrzeug, Abstandsradar für den Abstand zu einem Fahrbahnrand, ein Lastwechseldetektor, ein Frostmelder und ein biometrischer Sensor zur Überwachung des Fahrers.

Vorzugsweise wird eine elektronische Schaltungseinheit vorgesehen, die es ermöglicht, Betriebsparameter des Informationselementes auf den jeweiligen Fahrer abzustimmen. Es kann so insbesondere eine individuelle Reizschwelle eines Fahrers ermittelt werden und der Wirkungsgrad der den Tastsinn ansprechenden Mittel des Informationselementes daran angepasst werden. Die Reaktion des Fahrers auf die haptischen Reize kann so dem System einprogrammiert werden, wodurch eine individuelle Einstellung der erforderlichen Reizintensität möglich ist.

## Patentansprüche

1. Steuer- oder Schaltelement für Fahrzeuge, bei dem
ein Bedienelement (1) zum Steuern oder zum Schalten eines Fahrzeugs oder Fahrzeugteiles vorhanden ist und
Mittel (6, 17) zur Übermittlung von Warnungen und/oder Informationen über den Zustand des Fahrzeugs oder des Verkehrs an einen Fahrer vorhanden sind, wobei
diese Mittel so an oder in dem Bedienelement angebracht sind, dass der Fahrer während einer Bedienung des Fahrzeugs damit zumindest zeitweise in Berührung kommt, und
diese Mittel den Tastsinn mechanisch, chemisch oder elektrisch ansprechen, **dadurch gekennzeichnet, dass** die den Tastsinn ansprechenden Mittel eine matrixartige Anordnung beweglicher, in elektromagnetischen Spulen (8) gelagerter und unterseitig gefederter Nadeln (6) umfasst, die zeilenweise und spaltenweise angesteuert werden,
oder
die den Tastsinn ansprechenden Mittel eine matrixartige Anordnung seitlich kippbarer Nadeln umfasst, die zeilenweise und spaltenweise angesteuert werden,
oder
die den Tastsinn ansprechenden Mittel eine matrixartige Anordnung von Elektroden umfasst, die zeilenweise und spaltenweise angesteuert und mit unterschiedlichen elektrischen Potenzialen beaufschlagt werden.

2. Steuer- oder Schaltelement nach Anspruch 1, bei dem
den Tastsinn ansprechende Reizsignale als Warnsignale oder Informationssignale beim Eintreten vorgegebener Bedingungen in variabler Stärke übermittelt werden.

3. Steuer- oder Schaltelement nach Anspruch 1 oder 2, bei dem ein Lenkrad (1, 2) vorhanden ist und
die den Tastsinn ansprechenden Mittel so in das Lenkrad eingebaut sind, dass die Hände des Fahrers diese Mittel während des Lenkens berühren.

4. Steuer- oder Schaltelement nach einem der Ansprüche 1 bis 3, bei dem
die den Tastsinn ansprechenden Mittel eine Sensorfunktion besitzen, durch die eine haptische Einwirkung oder ein ausgeübter Druck in elektronisch verarbeitete Signale umgesetzt wird.

5. Anordnung eines Steuer- oder Schaltelementes nach einem der Ansprüche 1 bis 4, bei der
mindestens eine Vorrichtung zur Erzeugung eines Ansteuersignals für die den Tastsinn ansprechenden Mittel vorhanden ist und
diese Vorrichtung einen Sensor oder Detektor aus der Gruppe von
- Abstandsradar für den Abstands zu vorausfahrenden oder nachfolgenden Fahrzeugen,
- Abstandsradar für den Abstand zu einem Fahrbahnrand,
- Lastwechseldetektor,
- Frostmelder und
- biometrischer Sensor zur Überwachung des Fahrers umfasst.

6. Anordnung eines Steuer- oder Schaltelementes nach einem der Ansprüche 1 bis 4, bei der
eine elektronische Schaltungseinheit vorhanden ist, die dafür vorgesehen ist, eine individuelle Reizschwelle eines Fahrers zu ermitteln und einen Wirkungsgrad der den Tastsinn ansprechenden Mittel daran anzupassen.

## Claims

1. Control element or switching element for vehicles, in which an operator control element (1) for controlling or for switching a vehicle or vehicle component is present, and means (6, 17) for transmitting warnings and/or information about the state of the vehicle or the traffic to a driver are present, these means being mounted on or in the operator control element in such a way that while the vehicle is being operated the driver comes at least temporarily into contact with them and these means stimulating the sense of touch mechanically, chemically or electrically, **characterized in that** the means which stimulate the sense of touch comprise a matrix-like arrangement of moveable needles (6) which are mounted in electromagnetic coils (8), are sprung on the underside and are actuated in rows and columns, or the means which stimulate the sense of touch comprise a matrix-like arrangement of laterally tiltable needles which are actuated in rows and columns, or the means which stimulate the sense of touch comprise a matrix-like arrangement of electrodes which are actuated in rows and columns and to which different electrical potentials are applied.

2. Control or switching element according to Claim 1, in which stimulation signals which stimulate the sense of touch are transmitted as warning signals or information signals with a variable strength when predefined conditions occur.

3. Control element or switching element according to Claim 1 or 2, in which a steering wheel (1, 2) is present, and the means which stimulate the sense of touch are installed in the steering wheel in such a way that the hands of the driver are in contact with these means during the steering.

4. Control element or switching element according to one of Claims 1 to 3, in which the means which stimulate the sense of touch have a sensor function which converts a haptic effect or an exerted pressure into electronically processed signals.

5. Arrangement of a control element or switching element according to one of Claims 1 to 4, in which at least one device for generating an actuation signal for the means which stimulate the sense of touch is present, and this device comprises a sensor or detector composed of the group of
- distance radar for the distance from vehicles travelling ahead or travelling behind,
- distance radar for the distance from the edge of the roadway,
- load change detector
- frost sensor and
- biometric sensor for monitoring the driver.

6. Arrangement of a control element or switching element according to one of Claims 1 to 4, in which an electronic circuit unit is present, which is provided for determining an individual stimulation threshold of a driver and adapting thereto a level of effectiveness of the means which stimulate the sense of touch.

## Revendications

1. Organe de commande ou de commutation pour véhicules, où il existe un organe de conduite (1) permettant de commander ou de commuter un véhicule ou une partie du véhicule et des moyens (6, 17) permettant de transmettre, à un conducteur, des mises en garde et / ou des informations concernant l'état du véhicule ou la situation de la circulation,
où ces moyens sont montés sur ou dans l'organe de conduite de manière telle que le conducteur entre, au moins par intermittence, en contact avec eux pendant une conduite du véhicule
et où ces moyens s'adressent au toucher d'une façon mécanique, chimique ou électrique,
**caractérisé par le fait que**
les moyens s'adressant au toucher comprennent un système du type matrice à aiguilles mobiles (6), montées dans des bobines électromagnétiques (8) et suspendues sur ressort par le dessous, qui sont excitées ligne par ligne et colonne par colonne,
ou
les moyens s'adressant au toucher comprennent un système du type matrice à aiguilles basculant latéralement, qui sont excitées ligne par ligne et colonne par colonne,
ou
les moyens s'adressant au toucher comprennent un système du type matrice à électrodes, qui sont excitées ligne par ligne et colonne par colonne et qui sont soumises à divers potentiels électriques.

2. Organe de commande ou de commutation selon la revendication 1, dans lequel des signaux d'excitation s'adressant au toucher sont transmis, avec une intensité variable, comme signaux de mise en garde ou signaux d'information lorsque des conditions données se présentent.

3. Organe de commande ou de commutation selon la revendication 1 ou 2, dans lequel
il y a un volant (1, 2) et
les moyens s'adressant au toucher sont incorporés dans le volant de telle manière que les mains du conducteur touchent à ces moyens pendant la conduite.

4. Organe de commande ou de commutation selon l'une des revendications 1 à 3, dans lequel
les moyens s'adressant au toucher ont la fonction d'un capteur grâce à laquelle une action haptique ou l'exercice d'une pression sont convertis en signaux traités électroniquement.

5. Système d'organe de commande ou de commutation conforme à l'une des revendications 1 à 4, dans lequel
il y a au moins un dispositif permettant de générer un signal d'excitation pour les moyens s'adressant au toucher
et
ce dispositif comprend un capteur ou détecteur faisant partie du groupe
- des radars d'écartement permettant de détecter l'écartement entre véhicules avec le véhicule précédent ou le véhicule suivant,
- des radars d'écartement permettant de déterminer la distance du bord de la voie de roulement,
- des détecteurs de variation de charge,
- des détecteurs de gel et
- des capteurs destinés à la surveillance du conducteur.

6. Système d'organe de commande ou de commutation conforme à l'une des revendications 1 à 4, dans lequel
il y a une unité de circuits électroniques prévue pour déterminer un seuil individuel de réaction d'un conducteur et d'y adapter un rendement des moyens s'adressant au toucher.
